# EUROPEAN PATENT APPLICATION

(11) **EP 4 265 917 A1**
(43) Date of publication of application: **25.10.2023**
(21) Application number: 23168092.7
(22) Date of filing: 14.04.2023
(51) Int. Cl.: F04D 29/58, H02K 9/00, B64D 13/06

(54) **CABIN AIR COOLING SYSTEM**

(30) Priority: 19.04.2022 US 202217723699
(71) Applicant: Hamilton Sundstrand Corporation, Charlotte, NC 28217-4578 (US)
(72) Inventor: MERRITT, Brent J., Southwick, MA (US); ANDERSON Jr., David, Enfield, CT (US); MONGILLO, Mark, Southington, CT (US)
(74) Representative: Dehns

(57) **Abstract**

An aircraft system (36) includes a housing (80) having an outer surface (83) and an inner surface (85) defining a cavity (87). A motor (89) is arranged in the cavity. The motor includes a heat producing component (93) mounted to the inner surface. A first cooling system (102) is configured to direct a first heat exchange fluid in a first thermal exchange relationship with the heat producing component and a second cooling system (104) is configured to direct a second heat exchange fluid in a second thermal exchange relationship with the heat producing component. The second heat exchange fluid is distinct from the first heat exchange fluid and the second thermal exchange relationship is distinct from the first thermal exchange relationship.

## Description

### BACKGROUND

Exemplary embodiments pertain to the art of aircraft and, more particularly, to a cabin air cooler system for an aircraft.

Most aircraft include control systems that control various environmental parameters in occupied and unoccupied aircraft spaces. For example, a cabin air cooling system (CAC) may be employed to direct a flow of conditioned air into aircraft spaces. CAC systems typically include a fan coupled to a rotor that is positioned within a stator. Electrically exciting the stator results in rotation of the rotor and, by extension, the fan. Typically, the stator operates at temperatures that warrant cooling. To cool the stator, air may be passed between the stator and the rotor or between the stator and a housing of the CAC. In some cases, a sleeve is positioned between the stator and the housing. The sleeve may pass a heat exchange medium in a thermal exchange relationship with the stator.

### BRIEF DESCRIPTION

Disclosed in accordance with a non-limiting example is an aircraft system including a housing having an outer surface and an inner surface defining a cavity. A motor is arranged in the cavity. The motor includes a heat producing component mounted to the inner surface. A first cooling system is configured to direct a first heat exchange fluid in a first thermal exchange relationship with the heat producing component and a second cooling system is configured to direct a second heat exchange fluid in a second thermal exchange relationship with the heat producing component. The second heat exchange fluid is distinct from the first heat exchange fluid and the second thermal exchange relationship is distinct from the first thermal exchange relationship.

Additionally, or alternatively, in this or other non-limiting examples, the motor comprises an electric motor having a shaft, a rotor mounted to the shaft, and a stator defining the heat generating component disposed about the rotor.

Additionally, or alternatively, in this or other non-limiting examples, the first heat exchange fluid is a liquid and the second heat exchange fluid is a gas.

Additionally, or alternatively, in this or other non-limiting examples, the first cooling system includes a cooling jacket disposed between the outer surface and the inner surface, the cooling jacket extending about the housing.

Additionally, or alternatively, in this or other non-limiting examples, the stator includes a back iron mounted to the inner surface at the cooling jacket.

Additionally, or alternatively, in this or other non-limiting examples, the first heat exchange relationship is an indirect relationship with the back iron of the stator exchanging heat with the first heat exchange medium through the inner surface of the housing.

Additionally, or alternatively, in this or other non-limiting examples, a plurality of fins extend between the back iron and the inner surface of the housing, the plurality of fins transferring heat from the stator through the inner surface into the first heat exchange medium in the cooling jacket.

Additionally, or alternatively, in this or other non-limiting examples, the housing includes an inlet fluidically connected to the cooling jacket through the outer surface and an outlet fluidically connected to the cooling jacket through the outer surface, the inlet including a first quick connect and the outlet including a second quick connect.

Additionally, or alternatively, in this or other non-limiting examples, the second cooling system includes a flow path that extends along the shaft, the second heat exchange medium is air that passes along the flow path between the stator and the rotor.

Additionally, or alternatively, in this or other non-limiting examples, the second heat exchange relationship is a direct relationship with the air passing in direct contact with the stator.

Also disclosed, in accordance with a non-limiting example, is an aircraft including a fuselage having a passenger cabin, a wing mounted to the fuselage, an engine mounted to the wing and a cabin air mounted in the fuselage. The cabin air system including a compressor having a compressor housing having an inlet and an outlet and a cabin air cooling (CAC) system including a housing mounted to the compressor housing. The CAC housing having an outer surface and an inner surface defining a cavity that is fluidically connected to the compressor inlet. A motor is arranged in the cavity. The motor includes a heat producing component mounted to the inner surface. A first cooling system is configured to direct a first heat exchange fluid in a first thermal exchange relationship with the heat producing component and a second cooling system is configured to direct a second heat exchange fluid in a second thermal exchange relationship with the heat producing component. The second heat exchange fluid is distinct from the first heat exchange fluid and the second thermal exchange relationship is distinct from the first thermal exchange relationship.

Additionally, or alternatively, in this or other non-limiting examples, the motor comprises an electric motor having a shaft, a rotor mounted to the shaft, and a stator defining the heat generating component disposed about the rotor, the shaft being connected to the compressor.

Additionally, or alternatively, in this or other non-limiting examples, the first heat exchange fluid is a liquid and the second heat exchange fluid is a gas flowing through the compressor inlet.

Additionally, or alternatively, in this or other non-limiting examples, the first cooling system includes a cooling jacket disposed between the outer surface and the inner surface, the cooling jacket extending about the housing.

Additionally, or alternatively, in this or other non-limiting examples, the stator includes a back iron mounted to the inner surface at the cooling jacket.

Additionally, or alternatively, in this or other non-limiting examples, the first heat exchange relationship is an indirect relationship with the back iron of the stator exchanging heat with the first heat exchange medium through the inner surface of the housing.

Additionally, or alternatively, in this or other non-limiting examples, a plurality of fins extend between the back iron and the inner surface of the housing, the plurality of fins transferring heat from the stator through the inner surface into the first heat exchange medium in the cooling jacket.

Additionally, or alternatively, in this or other non-limiting examples, the housing includes an inlet fluidically connected to the cooling jacket through the outer surface and an outlet fluidically connected to the cooling jacket through the outer surface, the inlet including a first quick connect and the outlet including a second quick connect.

Additionally, or alternatively, in this or other non-limiting examples, the second cooling system includes a flow path that extends along the shaft and fluidically connected to the compressor inlet, the second heat exchange medium is air passing through the compressor inlet along the flow path between the stator and the rotor.

Additionally, or alternatively, in this or other non-limiting examples, the second heat exchange relationship is a direct relationship with the air passing in direct contact with the stator.

### BRIEF DESCRIPTION OF THE DRAWINGS

The following descriptions should not be considered limiting in any way. With reference to the accompanying drawings, like elements are numbered alike:
FIG. 1 is a schematic view of an aircraft including a cabin air cooling (CAC) system, in accordance with a non-limiting example;
FIG. 2 is a cross-sectional side view of a cabin air system component including the CAC system, in accordance with a non-limiting example;
FIG. 3 is a cross-sectional side view of the CAC system of FIG. 2, in accordance with a non-limiting example;
FIG. 4 is a cross-sectional side view of the CAC system of FIG. 2, in accordance with another non-limiting example; and
FIG. 5 is an axial end view of a heat producing component of the CAC system of FIG. 4, in accordance with a non-limiting example.

### DETAILED DESCRIPTION

A detailed description of one or more embodiments of the disclosed apparatus and method are presented herein by way of exemplification and not limitation with reference to the Figures.

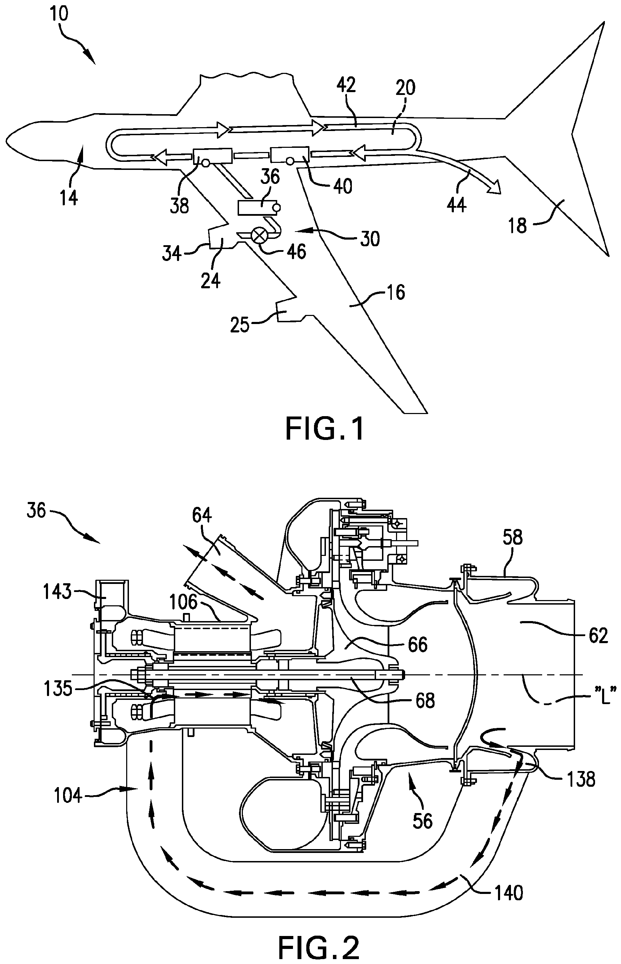

An aircraft in accordance with a non-limiting example is indicated generally at 10 in FIG. 1. Aircraft 10 includes a fuselage 14 supporting a pair of wings, one of which is shown at 16, and a tail 18. Fuselage 14 defines, in part, a cabin 20 that accommodates crew and/or passengers. Wing 16 supports a first engine 24 and a second engine 25. Fuselage 14 includes a cabin air system 30 that is connected to first engine 24. Cabin air system 30 may also be connected to second engine 25.

In a non-limiting example, cabin air system 30 includes an air intake 34 at first engine 24, a cabin air cooling (CAC) system 36, and an air mixing unit 38. An air filter 40 filters air passing through an air circulation circuit 42. An exhaust 44 discharges air from air circulation circuit 42 adjacent to tail 18. A bleed air valve 46 provides an interface between first engine 24 and CAC system 36. Referring to FIG. 2, in a non-limiting example, CAC system 36 includes a compressor 56 having a compressor housing 58 extending along a longitudinal axis "L". Compressor housing 58 includes a compressor inlet 62 and a compressor outlet 64. A compressor vane 66 is supported on a compressor shaft 68 in compressor housing 58. Compressor shaft 68 extends along longitudinal axis "L" which defines an axis of rotation for compressor vane 66.

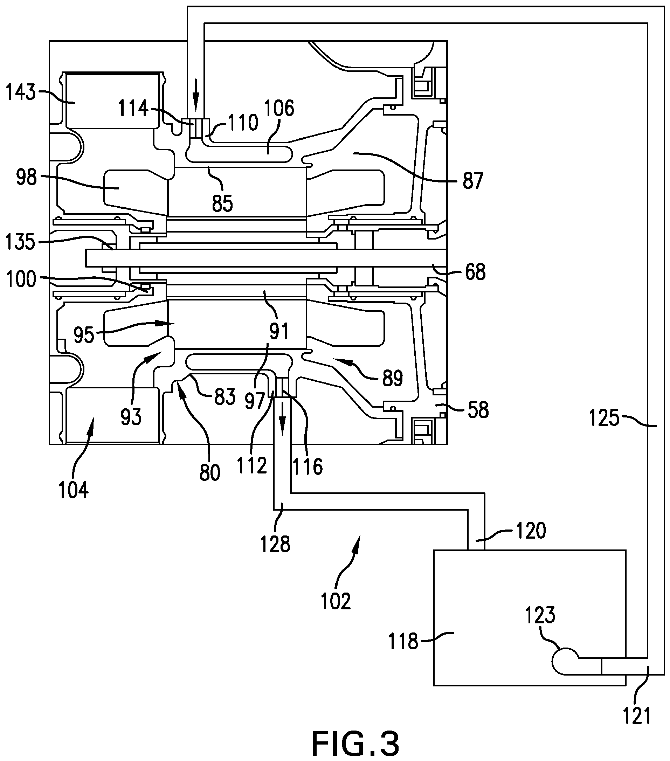

Referring to FIG. 3 and with continued reference to FIG. 2, in a non-limiting example, CAC system 36 also include a CAC housing 80 mounted to compressor housing 58. CAC housing 80 includes an outer surface 83 and an inner surface 85 that defines a cavity 87. A motor 89 is disposed in cavity 87. Motor 89 includes a rotor 91 mounted to compressor shaft 68 and thus is operatively connected to compressor vane 66. Rotor 91 spins or is rotated about longitudinal axis "L". In a non-limiting example, motor 89 includes a heat producing component 93 that may take the form of a stator 95. In one non-limiting example, stator 95 includes a core or back iron 97 that is directly mounted to inner surface 85 of CAC housing 80. Stator 95 also include a plurality of stator windings 98 supported by back iron 97. Compressor shaft 68 is supported in CAC housing 80 by a bearing 100. When energized, stator 95 produces a magnetic field which rotates rotor 91. Rotation of rotor 91 is imparted to compressor shaft 68 resulting in rotation of compressor vane 66 to as to produce an air flow that is passed into cabin 20.

In a non-limiting example, CAC system 36 includes a first cooling system 102 and a second cooling system 104 (FIG. 2) which, when operated, lower temperatures of heat producing component 93. As will become more fully evident herein, first cooling system 102 is an indirect cooling system and second cooling system 104 is a direct cooling system. By indirect, it should be understood that there is no direct contact between heat producing component 93 and a first heat exchange medium employed by first cooling system 102. By direct, it should be understood that there is a direct contact between a second heat exchange medium employed by second cooling system 104 and heat producing component 93.

In a non-limiting example, first cooling system 102 includes a cooling jacket 106 integrated into in CAC housing 80. More specifically, cooling jacket 106 is defined between outer surface 83 and inner surface 85 and is designed to contain the first heat exchange medium. In a non-limiting example, the first heat exchange medium is a liquid. In a non-limiting example, the liquid comprises water. However, it should be understood that various fluids both liquids and non-liquids may be employed as the first heat exchange medium.

In a non-limiting example, cooling jacket 106 includes an inlet 110 and an outlet 112. Inlet 110 includes a first quick connect 114 and outlet 112 includes a second quick connect 116. First and second quick connects 114 and 116 project outwardly from outer surface 83 of CAC housing 80. In a non-limiting example, inlet 110 and outlet 112 are fluidically connected to a reservoir 118 that contains an amount of the first heat exchange medium. Reservoir 118 includes a reservoir inlet 120 fluidically coupled to outlet 112 and a reservoir outlet 121 fluidically coupled to inlet 110. Reservoir 118 includes a pump 123 that provides a motive force to the first heat exchange medium. More specifically, the first heat exchange fluid circulates through a closed loop system (not separately labeled) including a delivery conduit 125 that extends between reservoir outlet 121 and inlet 110, and a return conduit 128 that extends between outlet 112 and reservoir inlet 120. The first heat exchange medium circulates through cooling jacket 106 absorbing heat from heat producing component 93 through inner surface 85. In a non-limiting example, delivery conduit 125, return conduit 128 and reservoir 118 may form part of another system in aircraft 10.

In a non-limiting example, second cooling system 104 includes a coolant passage 135 (FIG. 2) that extends along compressor shaft 68. Coolant passage 135 is fluidically connected to a motor cooling inlet 138 formed in compressor housing 58 at compressor inlet 62. The second heat exchange medium, which may take the form of an airflow entering into compressor housing 58 is passed through motor cooling inlet 138, along a delivery duct 140 to coolant passage 135. The second heat exchange medium then flows between heat producing component 93 and rotor 91. Additional flows of the second heat exchange medium may flow through a bearing cooling inlet 143 to cool bearing 100.

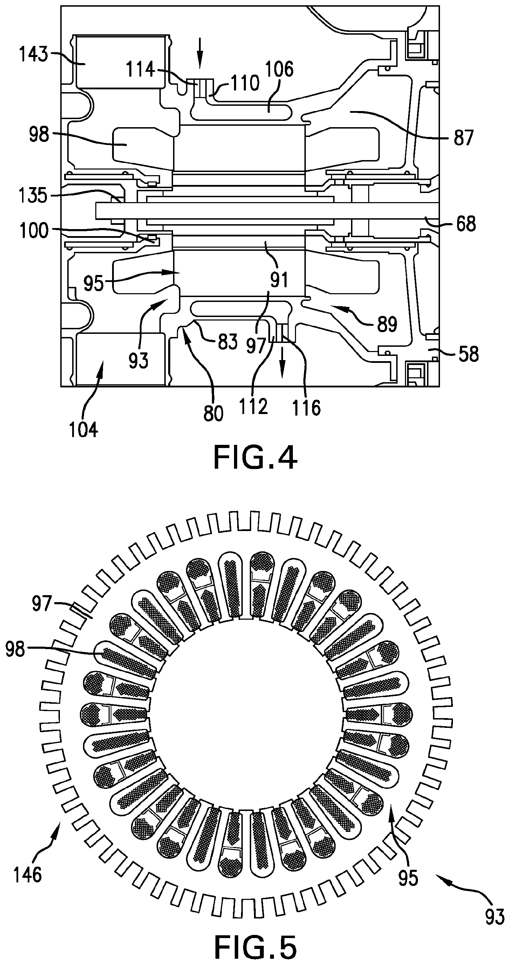

Reference will now follow to FIGS. 4 and 5, wherein like reference numbers represent corresponding parts in the respective views in describing CAC system 36 in accordance with another non-limiting example. In the another non-limiting example, heat producing component 93 is indirectly connected to inner surface 85. More specifically, a plurality of fins 146 extend between heat producing component 93 and inner surface 85. In the non-limiting example shown, plurality of fins 146 thermally connect back iron 97 and inner surface 85. With this arrangement, in addition to exchanging heat between heat producing component 93 and the first heat exchange medium in cooling jacket 106, additional cooling may be provided by the second heat exchange medium flowing through cavity 87 over the plurality of fins 146.

At this point, it should be understood that the non-limiting examples shown and described herein represent systems for increasing cooling efficiency of a heat producing component in an aircraft system. Multiple cooling systems relying on existing heat exchange mediums may be directed in indirect and direct contact with the heat producing component in order to reduce operating temperatures. Further, while the heat producing component is described as a motor stator, the cooling systems described herein may be employed in connection with a wide array of aircraft systems.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An aircraft system (36) comprising:
a housing (80) having an outer surface (83) and an inner surface (85) defining a cavity (87);
a motor (89) arranged in the cavity, the motor including a heat producing component (93) mounted to the inner surface;
a first cooling system (102) configured to direct a first heat exchange fluid in a first thermal exchange relationship with the heat producing component; and
a second cooling system (104) configured to direct a second heat exchange fluid in a second thermal exchange relationship with the heat producing component, the second heat exchange fluid being distinct from the first heat exchange fluid and the second thermal exchange relationship being distinct from the first thermal exchange relationship.

2. The aircraft system according to claim 1, wherein the motor (89) comprises an electric motor having a shaft, a rotor (91) mounted to the shaft, and a stator (95) defining the heat generating component disposed about the rotor.

3. The aircraft system according to claim 2, wherein the first heat exchange fluid is a liquid and the second heat exchange fluid is a gas.

4. The aircraft system according to claim 3, wherein the first cooling system (102) includes a cooling jacket (106) disposed between the outer surface (83) and the inner surface (85), the cooling jacket extending about the housing.

5. The aircraft system according to claim 4, wherein the stator (95) includes a back iron (97) mounted to the inner surface (85) at the cooling jacket.

6. The aircraft system according to claim 5, wherein the first heat exchange relationship is an indirect relationship with the back iron (97) of the stator (95) exchanging heat with the first heat exchange medium through the inner surface (85) of the housing (80), and/or further comprising:
a plurality of fins (146) extending between the back iron (97) and the inner surface of the housing, the plurality of fins transferring heat from the stator through the inner surface into the first heat exchange medium in the cooling jacket.

7. The aircraft system according to any of claims 4 to 6, wherein the housing (58) includes an inlet (110) fluidically connected to the cooling jacket (106) through the outer surface (83) and an outlet (112) fluidically connected to the cooling jacket through the outer surface, the inlet including a first quick connect (114) and the outlet including a second quick connect (116).

8. The aircraft system according to any of claims 3 to 7, wherein the second cooling system (104) includes a flow path that extends along the shaft, the second heat exchange medium is air that passes along the flow path between the stator (95) and the rotor (91); optionally
wherein the second heat exchange relationship is a direct relationship with the air passing in direct contact with the stator.

9. An aircraft (10) comprising:
a fuselage (14) including a passenger cabin (20);
a wing (16) mounted to the fuselage;
an engine (24, 25) mounted to the wing; and
a cabin air system (30) mounted in the fuselage, the cabin air system comprising:
a compressor (56) including a compressor housing (58) having an inlet (62) and an outlet (64);
a cabin air cooling (CAC) system (36) including a housing (80) mounted to the compressor housing, the CAC housing having an outer surface (83) and an inner surface (85) defining a cavity (87) that is fluidically connected to the compressor inlet;
a motor (89) arranged in the cavity, the motor including a heat producing component (93) mounted to the inner surface;
a first cooling system (102) configured to direct a first heat exchange fluid in a first thermal exchange relationship with the heat producing component; and
a second cooling system (104) configured to direct a second heat exchange fluid in a second thermal exchange relationship with the heat producing component, the second heat exchange fluid being distinct from the first heat exchange fluid and the second thermal exchange relationship being distinct from the first thermal exchange relationship.

10. The aircraft according to claim 9, wherein the motor (89) comprises an electric motor having a shaft, a rotor (91) mounted to the shaft, and a stator (95) defining the heat generating component (93) disposed about the rotor, the shaft being connected to the compressor.

11. The aircraft according to claim 10, wherein the first heat exchange fluid is a liquid and the second heat exchange fluid is a gas flowing through the compressor inlet.

12. The aircraft according to claim 11, wherein the first cooling system (102) includes a cooling jacket (106) disposed between the outer surface (83) and the inner surface (85), the cooling jacket extending about the housing; optionally
wherein the housing (80) includes an inlet (110) fluidically connected to the cooling jacket through the outer surface and an outlet (112) fluidically connected to the cooling jacket through the outer surface, the inlet including a first quick connect (114) and the outlet including a second quick connect (106).

13. The aircraft according to claim 12, wherein the stator (95) includes a back iron (97) mounted to the inner surface (85) at the cooling jacket (106).

14. The aircraft according to claim 13, wherein the first heat exchange relationship is an indirect relationship with the back iron (97) of the stator (95) exchanging heat with the first heat exchange medium through the inner surface of the housing, and/or
further comprising: a plurality of fins (146) extending between the back iron and the inner surface of the housing, the plurality of fins transferring heat from the stator through the inner surface into the first heat exchange medium in the cooling jacket.

15. The aircraft according to any of claims 11 to 14, wherein the second cooling system (104) includes a flow path that extends along the shaft and fluidically connected to the compressor inlet (62), the second heat exchange medium is air passing through the compressor inlet along the flow path between the stator and the rotor; optionally
wherein the second heat exchange relationship is a direct relationship with the air passing in direct contact with the stator.
